# EUROPÄISCHE PATENTSCHRIFT

(11) **EP 0 412 201 B1**
(45) Veröffentlichungstag und Bekanntmachung des Hinweises auf die Patenterteilung: **27.10.1993**
(21) Anmeldenummer: 89114924.7
(22) Anmeldetag: 11.08.1989
(51) Int. Cl.: H02K 17/08, H02K 3/28

(54) **Einphasen-Asynchronmotor**
Single-phase asynchronous motor
Moteur asynchrone monophasé

(43) Veröffentlichungstag der Anmeldung: 13.02.1991
(73) Patentinhaber: SIEMENS AKTIENGESELLSCHAFT, 80333 München (DE)
(72) Erfinder: Stepina, Jaroslav, Prof. Dr.-Ing., W-6750 Kaiserslautern (DE)

(56) Entgegenhaltungen:
- DE-A- 2 820 825
- DE-B- 2 627 835
- PATENT ABSTRACTS OF JAPAN, Band 2, Nr. 64, 17. Mai 1978, Seite 2172 (E-78) & JP-A-53 30 711
- PATENT ABSTRACTS OF JAPAN, Band 4, Nr. 67, 20. Mai 1980, Seite 161, (E-11)[549] & JP-A-55 37 876

## Beschreibung

Die Erfindung bezieht sich auf einen Einphasen-Asynchronmotor gemäß Oberbegriff des Patentanspruchs 1; ein derartiger Einphasen-Asynchronmotor ist aus der DE-B1 26 27 835 bzw. der DE-A-2 820 825 bekannt.

Im bekannten vorgenannten Fall soll ein Einphasen-Asynchronmotor geschaffen werden, der bei optimaler Auslegung für Anlaß und Betrieb sowie gut geschütztem Hilfswicklungsstrang einen möglichst kleinen Leistungs- und Kupferbedarf hat. Dazu wird vorgeschlagen, die gesamte Hilfswicklung in einen ersten Hilfswicklungsstrang und einen dazu in Reihe liegenden zweiten Hilfswicklungsstrang mit in Reihe nachgeschaltetem Betriebskondensator aufzuteilen und parallel zur Reihenschaltung aus zweitem Hilfswicklungsstrang und Betriebskondensator durch eine Anlaßvorrichtung in Form eines PCT-Widerstandes anzuschließen. Der Querschnitt des einfach gewickelten Drahtes des ersten Hilfswicklungsstranges soll so bemessen sein, daß er eine Belastung durch den maximalen Anlaufstrom erträgt, bis der PCT-Widerstand seinen Warmwiderstand kurz nach dem Hochlaufen des Motors erreicht hat. Weiterhin soll der Querschnitt des einfach gewickelten Drahtes des zweiten Hilfswicklungsstranges kleiner, vorzugsweise etwa halb so groß, wie der Drahtquerschnitt des ersten Hilfswicklungsstranges sein.

Durch die JP-A-5 330 711 ist ein Einphasen-Asynchronmotor mit einem Hauptwicklungsstrang und einem Hilfswicklungsstrang bekannt, die in getrennten Nuten untergebracht sind.

Gemäß vorliegender Erfindung kann bei einem Einphasen-Asynchronmotor mit in Nuten eines Blechpaketes neben einem Hauptwicklungsstrang untergebrachten Betriebs-Hilfswicklungsstrang und Anlauf-Hilfswicklungsstrang ein hinsichtlich Anlauf- und Betriebsverhalten bei hoher Isolierfestigkeit optimal auslegbare und gleichzeitig wicklungstechnisch einfache Herstellung der Hilfswicklungsstränge dadurch erreicht werden, daß der Betriebs-Hilfswicklungsstrang und der Anlauf-Hilfswicklungsstrang in getrennten, von dem Hauptwicklungsstrang freien Nuten untergebracht werden, wobei nach einer Ausgestaltung der Erfindung der Betriebs-Hilfswicklungsstrang und der Anlauf-Hilfswicklungsstrang aus gleichen Wicklungsdrähten gewickelt und für den Anlauf-Hilfswicklungsstrang zwei parallel geschaltete Wicklungsdrähte vorgesehen sind. Eine besonders einfache Einbringung einer derartigen Hilfswicklung ist nach einer weiteren Ausgestaltung der Erfindung dadurch gekennzeichnet, daß der Betriebs-Hilfswicklungsstrang und der eine der beiden parallelen Wicklungsdrähte des Anlauf-Hilfswicklungsstranges Teile von in einem Arbeitsgang vorwärts durchgehend gewickelten Spulen und der zweite Wicklungsdraht des Anlauf-Hilfswicklungsstranges Teil einer anschließenden rückwärts weitergewickelten Spule mit abschließender Trennung der Durchgangswickelverbindung zwischen dem Betriebs-Hilfswicklungsstrang und dem Anlauf-Hilfswicklungsstrang ist.

Durch die getrennte Anordnung der beiden Hilfswicklungsstränge in eigenen Nuten ergeben sich keine Probleme hinsichtlich der gegenseitigen Isolierung der Hilfswicklungsstränge, die durch gegenseitige Spannungsunterschiede und/oder ungleiche Dehnungen mit dadurch verursachten mechanischen Beanspruchungen bei Unterbringung in gleichen Nuten gegeben sein könnten. Gleichzeitig ergibt sich ein besonders einfaches Einbringen der Wicklungen in die von der Hauptwicklung freien Nuten des Blechpaketes. Die höhere Strombelastung des Anlauf-Hilfswicklungsstranges kann auf einfachere Weise durch die Paralleldrahtausführung des Anlauf-Wicklungsstranges ausgeglichen werden, wobei durch die Verwendung des gleichen Drahtquerschnittes für sämtliche Hilfswicklungsstränge und insbesondere durch die gemäß Anspruch 7 gekennzeichnete zunächst durchgehende Wicklung beider Hilfswicklungsstränge die optimale Wicklungsauslegung mit einfachsten wicklungstechnischen Maßnahmen erreichbar ist.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: das Prinzip-Schaltbild eines Einphasen-Asynchronmotors mit einem an ein speisendes Einphasennetz R;S angeschlossenen Hauptwicklungsstrang und dazu jeweils paralleler Reihenschaltung aus einem Betriebs-Hilfswicklungsstrang und einem Betriebskondensator bzw. aus einem Anlauf-Hilfswicklungsstrang und einem PTC-Widerstand,
- FIG 2: das Prinzip-Schaltbild eines Einphasen-Asynchronmotors mit einem an ein speisendes Einphasennetz R;S angeschlossenen Hauptwicklungsstrang und dazu paralleler Reihenschaltung aus dem Anlauf-Hilfswicklungsstrang und einem PTC-Widerstand mit zu diesem paralleler Reihenschaltung aus dem Betriebs-Hilfswicklungsstrang und einem Betriebskondensator,
- FIG 3: die erfindungsgemäße Verteilung der Spulen der Wicklungsstränge in 24 Nuten eines Statorblechpaketes eines zweipoligen Einphasen-Asynchronmotors,
- FIG 4: anhand einer einzigen Spulengruppe eines Betriebs-Hilfswicklungsstranges und eines Anlauf-Hilfswicklungsstranges aus FIG 3 die vorteilhafte wicklungstechnische Herstellung der durchgehend gewickelten Hilswicklungsstränge.

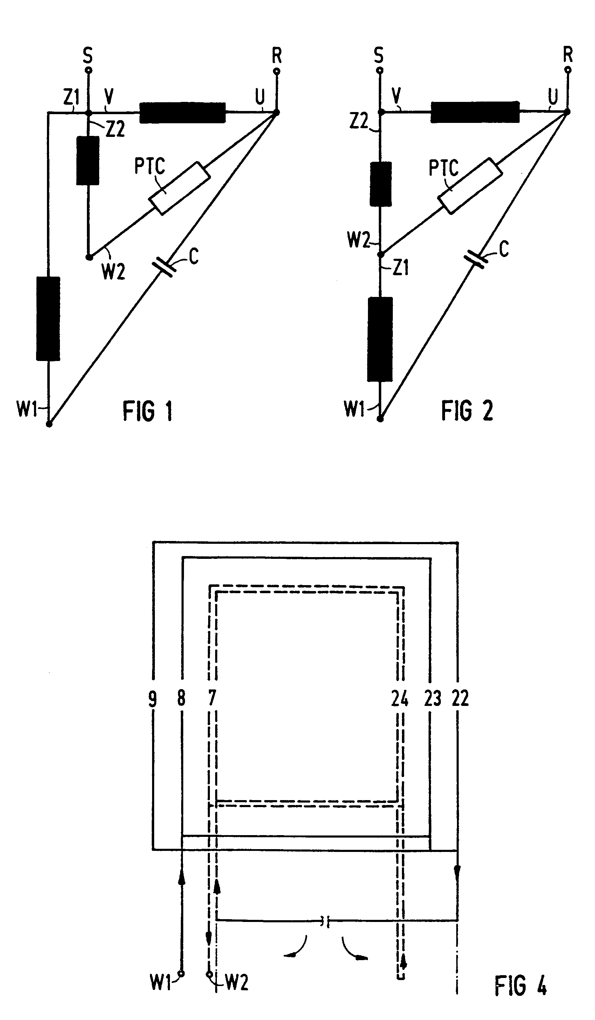

FIG 1 zeigt das Prinzip-Schaltbild eines Einphasen-Asynchronmotors mit einem an das speisende Einphasenwechselnetz R;S angeschlossenen Hauptwicklungstrang U-V. Parallel zum Hauptwicklungsstrang U-V liegt die Reihenschaltung eines Betriebswicklungsstranges W1-Z1 und eines Betriebskondensators C sowie die Reihenschaltung aus einem Anlauf-Hilfswicklungsstrang W2-Z2 und eines PTC-Widerstandes derart, daß der Anlauf-Hilfswicklungsstrang W2-Z2 nach dem Anlauf des Einphasen-Asynchronmotors und der dadurch bedingten Erwärmung und Erhöhung des ohmschen Widerstandes des PTC-Widerstandes praktisch abgeschaltet ist.

FIG 2 zeigt das Prinzip-Schaltbild eines Einphasen-Asynchron motors mit zum Hauptwicklungsstrang U-V paralleler Reihenschaltung aus Anlauf-Hilfswicklungsstrang W2-Z2 und PTC-Widerstand PTC und zu diesem paralleler Reihenschaltung aus Betriebs-Hilfswicklungsstrang W1-Z1 und Betriebskondensator C, derart daß nach dem Hochlauf des Motors ein Stromfluß über den Anlaufwiderstand des PCT-Widerstandes praktisch unterbrochen ist, jedoch der im Anlauf unterstützend wirkende Hilfswicklungsstrang W2-Z2 in Reihe zum eigentlichen Betriebs-Hilfswicklungsstrang W1-Z1 eingeschaltet bleibt.

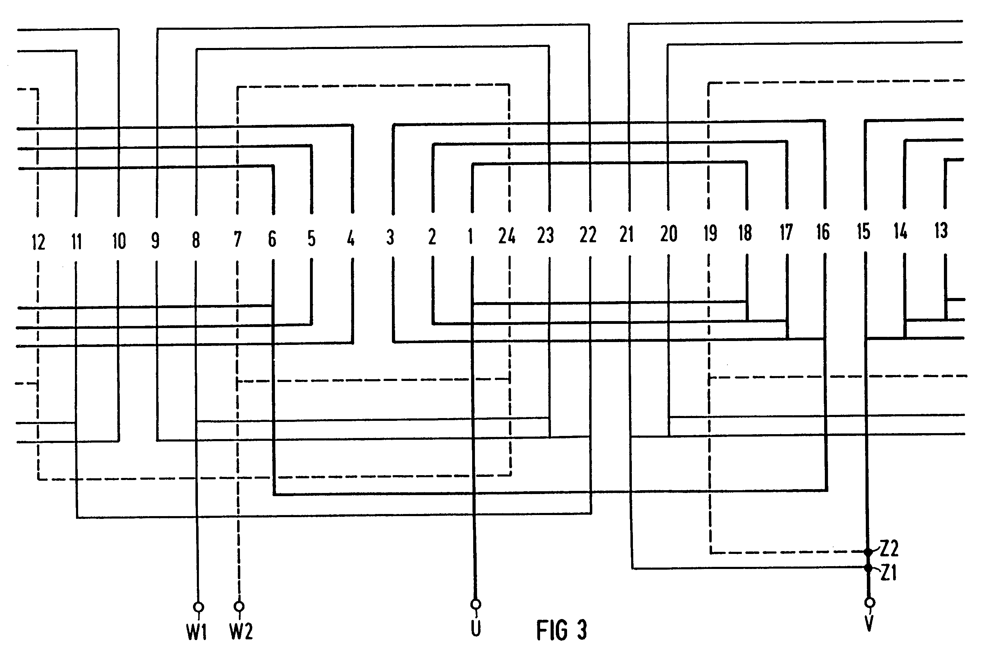

FIG 3 zeigt die erfindungsgemäße Verteilung der Wicklungsstränge des Einphasen-Asynchronmotors anhand der Abwicklung des Bohrungsumfanges eines hier nicht näher dargestellten Statorblechpaketes eines zweipoligen Einphasen-Asynchronmotors mit 24 Statornuten. Der Hauptwicklungsstrang ist in den Nuten 1-6 und 13-18 in an sich bekannter Weise untergebracht. Der Betriebs-Hilfswicklungsstrang W1-Z1 belegt die Nuten 8-11 und 20-23; der Anlauf-Hilfswicklungsstrang W2-Z2 ist in von dem Betriebs-Hilfswicklungsstrang W1-Z1 getrennten Nuten 7,24 und 12,19 untergebracht. Auf diese Art und Weise entfallen Probleme hinsichtlich der gegenseitigen Isolation der beiden Hilfswicklungsstränge. Unter Berücksichtigung des Umstandes, daß der Anlauf-Hilfswicklungsstrang W2-Z2 durch einen im Vergleich zum Betriebs-Hilfswicklungsstrang W1-Z1 größeren Strom belastet wird, ist in vorteilhafter Weise für den Anlauf-Hilfswicklungsstrang W2-Z2 der kleinstmögliche Spulenschritt vorgesehen, wobei in wicklungstechnisch einfacher Weise der Anlauf-Hilfswicklungsstrang W2-Z2 aus nur einer, konzentrisch zu der Spule bzw. den Spulen des Betriebs-Hilfswicklungsstranges W1-Z1 gewickelten Spule besteht.

Zur Berücksichtigung der höheren Strombelastung des AnlaufHilfswicklungsstranges W2-Z2 beim Hochlauf des Motors ist nach einer weiteren, anhand einer Spulengruppe gemäß FIG 4 erläuterten Ausgestaltung vorgesehen, den Anlauf-Hilfswicklungsstrang W2-Z2 mit einem größeren Gesamtquerschnitt derart zu versehen, daß zur Minderung des Herstellungsaufwandes in vorteilhafter Weise der Anlauf-Hilfswicklungsstrang W2-Z2 aus gleichen, jedoch parallel geschalteten Wicklungsdrähten gebildet ist. Diese Auslegung und Anordnung von Betriebs-Hilfswicklungsstrang W1-Z1 und Anlauf-Hilfswicklungsstrang W2-Z2 kann wickeltechnisch mit besonders geringem Aufwand dadurch hergestellt werden, daß in vorteilhafter Weise der Betriebs-Hilfswicklungsstrang W1-Z2 und der eine der beiden parallelen Wicklungsdrähte des Anlauf-Hilfswicklungsstranges W2-Z2 Teile von in einem Arbeitsgang vorwärts durchgehend gewickelten Spulen und der zweite Wicklungsdraht des Anlauf-Hilfswicklungsstranges W2-Z2 Teil einer anschließend rückwärts weitergewickelten Spule mit abschließender Trennung der Durchgangswickelverbindung zwischen dem Betriebs-Hilfswicklungsstrang W1-Z1 und dem Anlauf-Hilfswicklungsstrang W2-Z2 ist.

In FIG 4 ist durch Pfeileintragung in den Spulenseiten und durch die Linienführung des gestrichelt dargestellten Wicklungsdrahtes für die in den Nuten 7,24 untergebrachten Spule des Anlauf-Hilfswicklungsstranges W2-Z2 sowie durch die angedeuteten Trennungsstriche in der Querverbindung zwischen dem Ausgang der mit dem Betriebs-Hilfswicklungsstrang W1-Z1 belegten Nut 22 und der mit dem Anlauf-Hilfswicklungsstrang W2-Z2 belegten Nut 7 das vorgenannte Wickelprinzip angedeutet.

## Patentansprüche

1. Einphasen-Asynchronmotor mit in Nuten (1-24) eines Blechpaketes neben einem Hauptwicklungsstrang (U-V) untergebrachtem Betriebs-Hilfswicklungsstrang (W1-Z1)einerseits und Anlauf-Hilfswicklungsstrang (W2-Z2) andererseits, **dadurch gekennzeichnet**, daß der Betriebs-Hilfswicklungsstrang (W1-Z1) und der Anlauf-Hilfswicklungsstrang (W2-Z2) in voneinander getrennten und von dem Hauptwicklungsstrang (U-V) freien Nuten (8-11;20-23 bzw.7,12;19,24) untergebracht sind.

2. Einphasen-Asynchronmotor nach Anspruch 1, **dadurch gekennzeichnet**, daß parallel zu dem Hauptwicklungsstrang (U-V) eine Reihenschaltung aus dem Betriebs-Hilfswicklungsstrang (W1-Z1) und zumindest einem Betriebskondensator (C) und eine Reihenschaltung aus dem Anlauf-Hilfswicklungsstrang (W2-Z2) und zumindest einem PTC-Widerstand (PTC) angeschlossen sind (FIG 1).

3. Einphasen-Asynchronmotor nach Anspruch 1, **dadurch gekennzeichnet**, daß parallel zu dem Hauptwicklungsstrang (U-V) eine Reihenschaltung aus dem Anlauf-Hilfswicklungsstrang (W2-Z2) und zumindest einem PTC-Widerstand (PTC) mit einer zu diesem parallelen Reihenschaltung aus dem Betriebs-Hilfswicklungsstrang (W1-Z1) und zumindest einem Betriebskondensator (C) angeschlossen ist (FIG 2).

4. Einphasen-Asynchronmotor nach zumindest einem der Ansprüche 1 bis 3, **dadurch gekennzeichnet**, daß der Anlauf-Hilfswicklungsstrang (W2-Z2) aus nur einer, konzentrisch zu der Spule bzw. den Spulen des Betriebs-Hilfswicklungsstranges (W1-Z1) gewickelten Spule besteht.

5. Einphasen-Asynchronmotor nach zumindest einem der Ansprüche bis 4, **dadurch gekennzeichnet**, daß der Anlauf-Hilfswicklungsstrang (W2-Z2) den kürzestmöglichen Spulenschritt der Hilfswicklungsstränge (W1-Z1;W2-Z2) aufweist.

6. Einphasen-Asynchronmotor nach zumindest einem der Ansprüche 1 bis 5, **dadurch gekennzeichnet**, daß der Betriebs-Hilfswicklungsstrang (W1-Z1) und der Anlauf-Hilfswicklungsstrang (W2-Z2) aus gleichen Wicklungsdrähten gewickelt und für den Anlauf-Hilfswicklungsstrang (W2-Z2) zwei parallel geschaltete Wicklungsdrähte vorgesehen sind.

7. Einphasen-Asynchronmotor nach Anspruch 6, **dadurch gekennzeichnet**, daß der Betriebs-Hilfswicklungsstrang (W1-Z1) und der eine der beiden parallelen Wicklungsdrähte des Anlauf-Hilfswicklungsstranges (W2-Z2) Teile von in einem Arbeitsgang vorwärts durchgehend gewickelten Spulen und der zweite Wicklungsdraht des Anlauf-Hilfswicklungsstranges (W2-Z2) Teil einer anschließend rückwärts weitergewickelten Spule mit abschließender Trennung der Durchgangswickelverbindung zwischen dem Betriebs-Hilfswicklungsstrang (W1-Z1) und dem Anlauf-Hilfswicklungsstrang (W2-Z2) ist.

## Claims

1. Single-phase asynchronous motor with an operating-auxiliary winding phase (W1-Z1) fitted in grooves (1-24) of a laminated core near a main winding phase (U-Y) on the one hand and the auxiliary starting winding phase (W2-Z2) on the other hand, characterised in that the operating-auxiliary winding phase (W1-Z1) and the auxiliary starting winding phase (W2-Z2) are fitted in grooves (8-11; 20-23 or 7, 12; 19, 24) separated from each other and free from the main winding phase (U-V).

2. Single phase asynchronous motor according to claim 1, characterised in that a series connection of the operating-auxiliary winding phase (W1-Z1) and at least one running capacitor (C) and a series connection of the auxiliary starting winding phase (W2-Z2) and at least one PTC resistance (PTC) are connected in parallel with the main winding phase (U-V) (Fig. 1).

3. Single phase-asynchronous motor according to claim 1, characterised in that a series connection of the auxiliary starting winding phase (W2-Z2) and at least one PTC resistance (PTC) having parallel to it a series connection of the operating auxiliary winding phase (W1-Z1) and at least one running capacitor (C), are connected in parallel with the main winding phase (U-V) (Fig. 2).

4. Single phase asynchronous motor according to at least one of claims 1 to 3, characterised in that the auxiliary starting winding phase (W2-Z2) comprises only one coil wound concentrically to the coil or the coils of the operating auxiliary winding phase (W1-Z1).

5. Single phase asynchronous motor according to at least one of claims 1 to 4, characterised in that the auxiliary starting winding phase (W2-Z2) has the shortest possible coil step of the auxiliary winding phases (W1-Z1; W2-Z2).

6. Single phase asynchronous motor according to at least one of claims 1 to 5, characterised in that the operating auxiliary winding phase (W1-Z1) and the auxiliary starting winding phase (W2-Z2) are wound from the same winding wire, and two parallel-connected winding wires are provided for the auxiliary starting winding phase (W2-Z2).

7. Single phase asynchronous motor according to claim 6, characterised in that the operating auxiliary winding phase (W1-Z1) and one of the two parallel winding wires of the auxiliary starting winding phase (W2-Z2) are parts of a coil wound continuously forwards in one operation, and the second winding wire of the auxiliary starting winding phase (W2-Z2) is part of a subsequently backwards-wound coil with final separation of the continuous-winding connection between the operating auxiliary winding phase (W1-Z1) and the auxiliary starting winding phase (W2-Z2).

## Revendications

1. Moteur asynchrone monophasé comportant, d'une part, un faisceau (W1-Z1) d'enroulements auxiliaires de service, et, d'autre part, un faisceau (WZ-Z2) d'enroulements auxiliaires de démarrage, logés dans des encoches (1-24) d'un paquet de tôles à côté d'un faisceau (U-V) d'enroulements principaux, caractérisé par le fait que le faisceau (W1-Z1) d'enroulements auxiliaires de service et le faisceau (W2,Z2) d'enroulements auxiliaires de démarrage sont logés dans des encoches (8-11; 20-23 ou 7,12;19,24), qui sont séparées les unes des autres et ne contiennent pas le faisceau (U-V) d'enroulements principaux.

2. Moteur asynchrone monophasé suivant la revendication 1, caractérisé par le fait qu'un circuit série formé du faisceau (W1-Z1) d'enroulements auxiliaires de service et d'au moins un condensateur de service (C) et un circuit série formé du faisceau (W2-Z2) d'enroulements auxiliaires de démarrage et d'au moins une résistance à coefficient de température positif (PTC), sont branchés en parallèle avec le faisceau (U-V) d'enroulements principaux (figure 1).

3. Moteur asynchrone monophasé suivant la revendication 1, caractérisé par le fait qu'un circuit formé du faisceau (W2-Z2) d'enroulements auxiliaires de démarrage et d'au moins une résistance à coefficient de température positif (PTC) est branché en parallèle avec le faisceau (U-V) d'enroulements principaux en étant raccordés à un circuit série, parallèle au circuit série précédent et formé du faisceau (W1-Z1) d'enroulements auxiliaires de service et d'au moins un condensateur de service (C) (figure 2).

4. Moteur asynchrone monophasé suivant au moins l'une des revendications 1 à 3, caractérisé par le fait que le faisceau (W2-Z2) d'enroulements auxiliaires de démarrage est constitué par seulement une bobine enroulée concentriquement à la ou aux bobines du faisceau (W1-Z1) d'enroulements auxiliaires de service.

5. Moteur asynchrone monophasé suivant au moins l'une des revendications 1 à 4, caractérisé par le fait que le faisceau (W2-Z2) d'enroulements auxiliaires de démarrage possède le pas le plus court possible de bobine des faisceaux (W1-Z1; W2-Z2) d'enroulements auxiliaires.

6. Moteur asynchrone monophasé suivant au moins l'une des revendications 1 à 5, caractérisé par le fait que le faisceau (W1-Z1) d'enroulements auxiliaires de service et le faisceau (W2-Z2) d'enroulements auxiliaires de démarrage sont bobinés avec les mêmes fils de bobinage et que pour le faisceau (W2-Z2) d'enroulements auxiliaires de démarrage il est prévu deux fils de bobinage branchés en parallèle.

7. Moteur asynchrone monophasé suivant la revendication 6, caractérisé par le fait que le faisceau (W1-Z1) d'enroulements auxiliaires de service et l'un des deux fils de bobinage parallèles du faisceau (W2-Z2) d'enroulements auxiliaires de démarrage font partie de bobines bobinées de façon continue dans le sens direct en une étape opératoire, et que le second fil de bobinage du faisceau (W2-Z2) d'enroulements auxiliaires de démarrage fait partie d'une bobine, dont le bobinage est poursuivi de façon rétrograde, avec suppression finale de la liaison de bobinage continu entre le faisceau (W1-Z1) d'enroulements auxiliaires de service et le faisceau (W2-Z2) d'enroulements auxiliaires de démarrage.
